Europäisches Patentamt

European Patent Office

Office européen des brevets

(19)

(11) Veröffentlichungsnummer: **0 024 446**
**B1**

(12) **EUROPÄISCHE PATENTSCHRIFT**

(45) Veröffentlichungstag der Patentschrift: **08.02.84**

(21) Anmeldenummer: **79103168.5**

(22) Anmeldetag: **28.08.79**

(51) Int. Cl.³: **B 60 R 21/10, A 62 B 35/02**

(54) Sicherheitsgurtanordnung für die Insassen von Fahrzeugen, insbesondere von Kraftfahrzeugen.

(43) Veröffentlichungstag der Anmeldung:
**11.03.81 Patentblatt 81/10**

(45) Bekanntmachung des Hinweises auf die Patenterteilung:
**08.02.84 Patentblatt 84/6**

(84) Benannte Vertragsstaaten:
**DE FR GB IT SE**

(56) Entgegenhaltungen:
**DE - A - 2 537 437**
**DE - A - 2 539 359**
**DE - A - 2 613 654**
**DE - A - 2 635 095**
**DE - A - 2 720 789**
**DE - A - 2 806 532**
**DE - B - 2 249 109**
**DE - B - 2 366 096**

(73) Patentinhaber: **Adam Opel Aktiengesellschaft**
**Bahnhofsplatz 1 Postfach 1560**
**D-6090 Rüsselsheim (DE)**

(72) Erfinder: **Hug, Karl, Ing. (grad.)**
**Lenzhahner Weg 35**
**D-6272 Niedernhausen (DE)**

(74) Vertreter: **Baumgarten, Jochem, Dipl.-Ing. et al,**
**C/O Adam Opel Aktiengesellschaft Bahnhofsplatz**
**1 Postfach 1560**
**D-6090 Rüsselsheim (DE)**

Courier Press, Leamington Spa, England.

Sicherheitsgurtanordnung für die Insassen von Fahrzeugen, insbesondere von Kraftfahrzeugen

Die Erfindung bezieht sich auf eine Sicherheitsgurtanordnung für die Insassen von Fahrzeugen, insbesondere von Kraftfahrzeugen, mit einem diagonal den Oberkörper des zu sichernden Fahrzeugeinsassen überspannenden Schultergurt, wobei der obere Befestigungs- bzw. Umlenkpunkt des Gurtbandes selbsttätig stufenlos höhenverstellbar und durch einen um eine Drehachse schwenkbaren hebelartigen Gurtbeschlag mit Gurtöse gebildet ist, an dem das obere Ende bzw. Umlenkende des Schultergurtes befestigt bzw. umgelenkt ist.

Ein stufenlose Höhenverstellbarkeit des oberen Schultergurt-Befestigungspunktes ermöglicht eine Anpassung des Schultergurtverlaufes an Personen der unterschiedlichsten Körpermaße, wobei in jedem Fall dafür gesorgt ist, daß das über die Schulter des Fahrzeuginsassen laufende Gurtband zum oberen Befestigungspunkt hin im richtigen Winkel ansteigt.

Durch die deutsche Offenlegungsschrift 27 20 789 ist eine Sicherheitsgurtanordnung nach dem Oberbegriff des Patentanspruches 1 bekannt, bei der der obere Befestigungspunkt des Schultergurtes an einer in einer senkrechten Führung beweglich angeordneten Laufkatze oder alternativ an einem endlosen Zugglied befestigt sein soll, das frei umlaufend über zwei ortsfeste Umlenkpunkte geführt ist.

Die bekannte Sicherheitsgurtanordnung erfordert in ihrer konstruktiven Gestaltung einen hohen technischen und kostenmäßigen Aufwand. Die Höhenverstellbarkeit des oberen Schultergurt-Befestigungspunktes ist zwar sehr leichtgängig; dies hat aber andererseits den Nachteil, daß die beweglichen Teile des Schultergurt-Befestigungspunktes infolge der während der Fahrt auftretenden Erschütterungen sich ständig geringfügig auf- und abbewegen. Hierdurch kann es zu vorzeitigem Verschleiß der beweglichen Teile kommen. Um dies zu vermeiden, sieht die bekannte Sicherheitsgurtanordnung eine spezielle Reibungsbremse vor, um die Bewegung der Laufkatze bzw. des Zuggliedes zu bremsen.

Eine weitere Sicherheitsgurtanordnung nach dem Oberbegriff des Patentanspruches 1 ist durch die Deutsche Auslegeschrift 23 66 096 bekanntgeworden. Hiert werden auch die oben beschriebenen Nachteile der Sicherheitsgurtanordnung nach der Deutschen Offenlegungsschrift 27 20 789 durchaus weitgehend vermieden, da die Verstellbarkeit in einfacher Weise durch einen in einer Schlitzführung verschiebbaren Gleitstein erfolgt. Voraussetzungen für die erforderliche Leichtgängigkeit der Höhenverstellbarketi des oberen Schultergurt-Befestigungspunktes sind allerdings bei dieser bekannten Sicherheitsgurtanordnung einerseits große Toleranzen des Gleitsteins gegenüber der Schlitzführung und andererseits eine besonders gute konstruktive Abstimmung der betreffenden Karosserieteile (Mittelsäule) auf die Gegebenheiten der Höhenverstellvorrichtung.

Die Erfindung, wie sie in den Ansprüchen gekennzeichnet ist, löst die Aufgabe, eine Sicherheitsgurtanordnung der einganges bezeichneten Art so asuzugestalten, daß sie leichtgängig, dabei aber einfach im Aufbau ist, keine zusätzliche Reibungsbremse benötigt und darüber hinaus dem Konstrukteur hinsichtlich der stilistischen und konstruktiven Gestaltung der Fahrzeugkarosserie, insbesondere in bezug auf die Mittelsäule, keinerlei Einschränkungen auferlegt.

Die durch die Erfindung erreichten Vorteile sind im wesentlichen in folgendem zu sehen:

1. Die erfindungsgemäße Höhenverstellung durch einen hebelartigen Gurtbeschlag läßt vorteilhaft dem Konstrukteur freie Hand hinsichtliche Breite, Form und Lage der Mittelsäule der Fahrzeugkarosserie. So kann die Mittelsäule z.B. im oberen Bereich möglichst schmal gehalten sein, um die Sicht zur Seite nicht einzuschränken. Sie kann ferner so konstruiert sein, daß dem Kopf des Fahrzeugbenutzers beim Ein- und Aussteigen genügend Freiraum geboten wird. Dies kann z.B. durch mehr oder weniger starkes Neigen der Mittelsäule nach hinten erreicht werden, ohne daß hierdurch die Funktion der erfindungsgemäßen Sicherheitsgurtanordnung beeinträchtigt wird.

2. Die Paarung Welle—Bohrung bei der Schwenkbarkeit des hebelartigen Gurtbeschlages erlaubt kleinere Toleranzen als eine lange Gleitführung und arbeitet deshalb sehr geräuscharm.

3. Bei starker Deformierung der Mittelsäule (nach einem Fahrzeugunfall) erfolgt kein "Ausknöpfen" des verstellbaren Schultergurt-Befestigungspunktes; die Funktion der erfindungsgemäßen Verstellvorrichtung bleibt auch bei erheblicher Karosseriedeformierung intakt. Die Verankerung des erfindungsgemäßen hebelartigen, Gurtbeschlages wird so selbst bei einknickendem Dachpfosten kein Sicherheitsrisiko für die Insassenrückhaltung darstellen.

4. Da eine in einer Bohrung gelagerte Welle ein erprobtes Maschinenelement ist, dessen Verschleiß auch ohne "Bremse" kontrollierbar ist, kann eine aufwendige Reibungsbremse entfallen.

5. Die erfindungsgemäße Kombination von schwenkbarem hebelartigem Gurtbeschlag und Welle—Bohrung—Befestigung ist im wesentlichen vergleichbar dem Gewicht, den kosten und der Funktionssicherheit heutiger Gurtbeschläge *ohne*

Höhenverstellung, bietet aber gegenüber letzteren zusätzlichen Komfort und größere Sicherheit vor Verletzungen.

6. Ein weiterer Aspekt betrifft die Nachrüstbarkeit. Die Befestigungsmutter eines ursprünglich fixen Gurt-Verankerungspunktes ist (kann) bei nachträglichem Einbau des höhenverstellbaren hebelartigen Gurtbeschlages einziger Karosserie-Verankerungspunkt (sein).

7. Die Erfindung beitet schließlich gegenüber den bekannten höhenverstellbaren Sicherheitsgurtanordnungen einen erheblichen Gewichts- und Kostenvorteil, weil sie mit weniger und leichteren Funktionssteilen auszukommen vermag und eine einfachere Montage ermöglicht.

Im folgenden wird die Erfindung anhand von lediglich mögliche Ausführungswege dargestellten Zeichnungen näher erläutert. Es zeigt:

Fig. 1 den vorderen Teil eines Personenkraftfahrzeuges (teilweise und schematisch) in Seitenansicht,

Fig. 2 einen Schnitt längs der Linie II—II in Fig. 1,

Fig. 3 einen Schnitt längs der Linie III—III in Fig. 1,

Fig. 4 die genauen kinematischen Verhältnisse bei einer erfindungsgemäßen Sicherheitsgurtanordnung ohne Aufrollautomatik anhand einer Darstellung ähnlich Fig. 1—3,

Fig. 5 eine Ausführungsform einer Sicherheitsgurtanordnund nach der Erfindung mit Aufrollautomatik in gegenüber Fig. 1—4 vergrößerter Darstellung,

Fig. 6 den Gegenstand von Fig. 5, wobei der Schultergurt durch eine Umlenköse des Gurtbeschlages hindurchgezogen ist,

Fig. 7 eine andere Ausführungsform einer Sicherheitsgurtanordnung mit Aufrollautomatik nach der Erfindung in perspektivischer Darstellung, ähnlich wie bei Fig. 5 bzw. 6, und

Fig. 8 eine weitere Ausführungsform einer Sicherheitsgurtanordnung nach der Erfindung ohne Aufrollautomatik, wobei eine innere Schutzabdeckung vorgesehen ist.

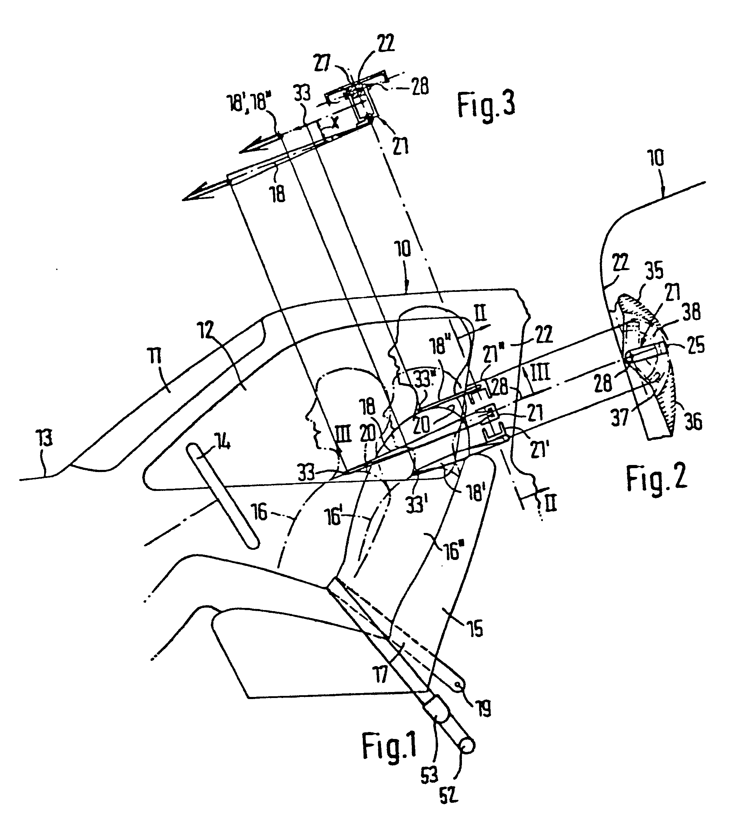

In Fig. 1 bezeichnet 10 den vorderen Teil der Karosserie eines Personenkraftfahrzeuges mit Windschutzscheibe 11, vorderem Seitenfenster 12, Fronthaube 13 und Lenkrad 14. Auf dem mit 15 bezifferten vorderen Beifahrersitz befindet sich ein Fahrzeuginsasse 16. Dieser ist mittels eines Dreipunkt-Sicherheitsgurtsystems angeschnallt, welches aus einem Beckengurt 17 und einem in dem vom Insassen verdeckten Bereich der besseren Übersicht halber mit vollen Linien dargestellten Schultergurt 18 besteht. Der Beckengurt 17 ist bei 19 in bekannter und daher nicht näher gezeigter Weise am Fahrzeugboden fest verankert, wohingegen das auf der anderen Seite, in der Fahrzeugmitte befindliche Ende des Beckengurtes 17 zusammen mit dem unteren Ende des Schultergurtes 18 in ein am Fahrzeugboden bei 52 befestigtes Gurtschloß 53 lösbar eingreift.

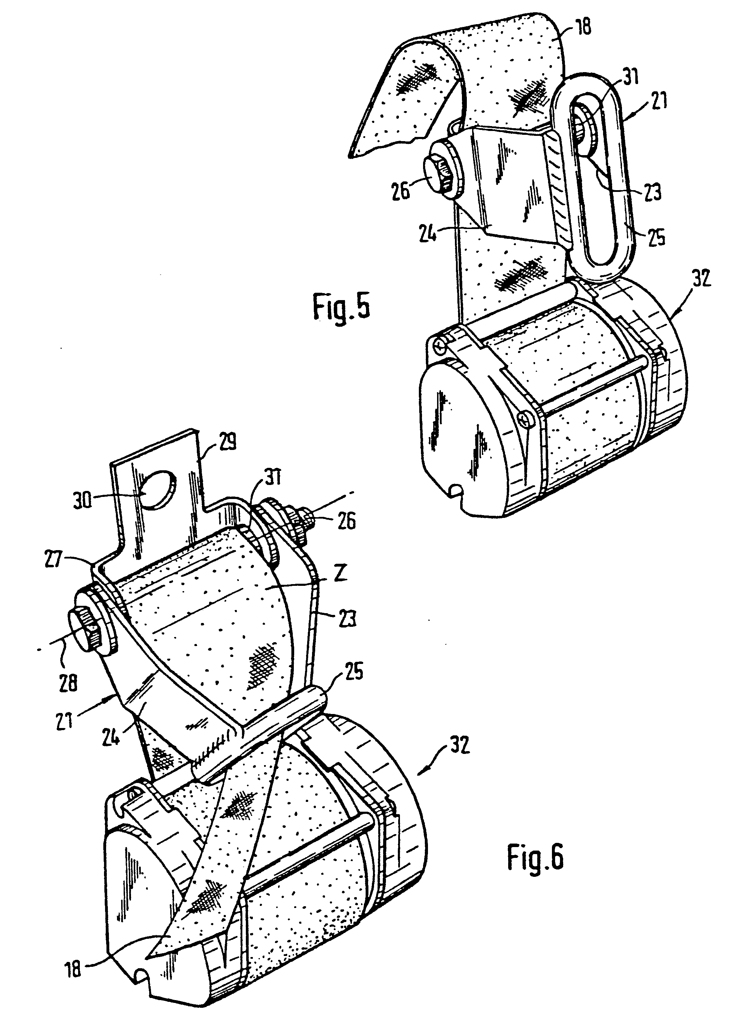

Wie Fig. 1 weiterhin zeigt, verläuft der Schultergurt 18 von der mit 20 bezeichneten Schulter des Fahrzeuginsassen 16 schräg nach oben zu einem oberen Gurtbefestigungspunkt 21. An dem oberen Gurtbefestigungspunkt 21 wird bei einer Sicherheitsgurtanordnung mit automatischem Gurtaufroller (vgl. hierzu Fig. 5—7) der Schultergurt 18 nach unten umgelenkt und mündet schließlich in einen z.B. am Fahrzeugboden seitlich des Sitzes 15 fest verankerten automatischen Gurtaufroller (32) ein. Der somit entweder als befestigungs- oder als Umlenkbeschlag ausgebildete obere Gurtbefestigungspunkt 21 ist—wie Fig. 1 verdeutlicht—an der mit 22 bezifferten B-Säule der Fahrzeugkarosserie 10 angeschlagen.

Bei der Ausführungsform nach Fig. 5 und 6 besteht der eine Umlenkfunktion ausübende obere Gurtbefestigungspunkt 21 aus zwei Hebelteilen 23, 24, die an ihren vorderen Enden durch eine dort angeschweißte Umlenköse 25 miteinander verbunden sind. Die beiden Hebelteile 23, 24, die zusammen einen hebelartigen Gurtbeschlag bilden, sind mittels eines Gelenkbolzens 26 an einem Lagerbock 27 um eine Achse 28 schwenkbar gelagert. Der Lagerbock 27 seinerseits ist an der Fahrzeugkarosserie 10, z.V. an deren B-Säule 22, fest verankert. Hierzu dient eine Lasche 29 mit Bohrung 30, durch die eine entsprechende Befestigungsschraube (nicht gezeigt) hindurchgesteckt werden kann, die dann mit der Fahrzeugkarosserie verschraubt wird. Wie Fig. 6 zeigt, wird der von der Schulter 20 des Fahrzeuginsassen 16 kommende Schultergurtteil 18 durch die Öse 25 hindurchgeführt und anschließend hinter einer zur Aufnahme des Gelenkbolzens 26 dienenden Lagerhülse 31 nach unten umgeleitet, wo er schließlich in den mit 32 bezeichneten automatischen Gurtaufroller einmündet. Selbstverständlich ist der vertikale Abstand zwischen dem oberen Gurtbefestgungspunkt 21 und dem am Fahrzeugboden verankerten automatischen Gurtaufroller 32 in der Praxis wesentlich größer als in den Fig. 5—7 dargestellt. Die Fig. 5—7 sollen also nur das Prinzip der Schultergurtumlenkung veranschaulichen.

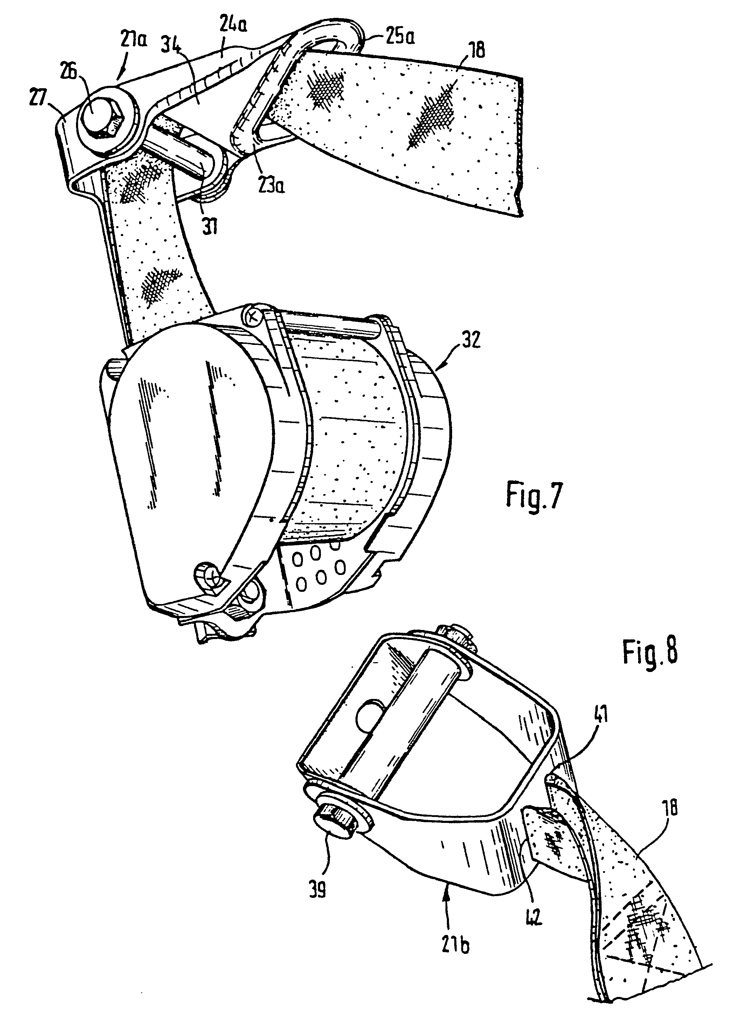

Bei der Ausführungsform nach Fig. 7 ist die hier mit 25a bezeichnete Umlenköse mit Bezug auf die in diesem Fall unterschiedlich langen Teile 23a und 24a des hebelartigen Gurtbeschlages schräg angeordnet. Außerdem erstreckt sich zwischen den beiden Teilen 23a und 24a im Unterschied zur Ausführungsform nach Fig. 5 und 6 eine zur Versteifung dienende Platte 34. Im übrigen entspricht die Ausführungsform nach Fig. 7 der Ausführungsform nach Fig. 5 und 6, was auch durch die Verwendung gleicher Bezugszeichen ausgedrückt ist. Die Umlenkung des Gurtes bei 31 soll möglichst nah an der Achse 28 erfolgen, da sonst der Gurtteil Z (zwischen 25 und 31) eine die Drehung störende Momentenkomponente ausübt.

Die Funktionsweise des in den Figuren 5—7 im einzelnen gezeigten hebelartigen Gurtbeschlages 21 bzw. 21a geht nun aus den Figuren 1—4 hervor.

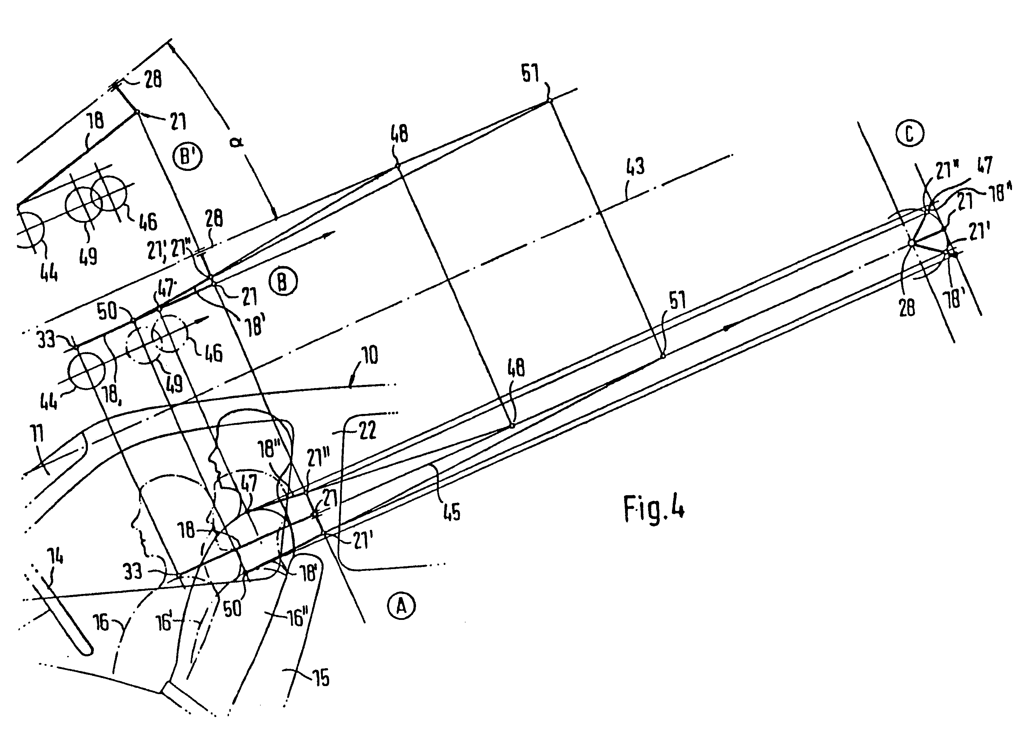

In den Darstellungen nach Fig. 1 und 4 sind jeweils Fahrzeuginsassen zweier unterschiedlicher Körpermaße gezeigt. Der Fahrzeuginsasse geringerer Körpergröße ist hierbei jeweils in strichpunktierten Linien dargestellt. Zur Veranschaulichung der Wirkungsweise der erfindungsgemäßen Sicherheitsgurtanordnung ist der in strichpunktierten Linien dargestellte Fahrzeuginsasse einmal in einer vorderen und zum anderen in einer hinteren Sitzposition gezeigt. Die Sitzposition des Fahrzeuginsassen größerer Körperambmessungen (in ausgezogenen Linien dargestellt) entspricht der rückwärtigen Sitzposition des Fahrzeuginsassen kleinerer Körperabmessungen.

Aufgrund der Schwenkbarkeit des hebelartigen Gurtbeschlages 21 bzw. dessen Teile 23, 24 um die Schwenkachse 28 ist eine Anpassungsfähigkeit des oberen Schultergurt-Befestigungspunktes an die jeweiligen Körperabmessungen des Fahrzeuginsassen 16 gegeben. So nimmt der oberen Schultergurt-Befestigungspunkt bei dem kleinerern Fahrzeuginsassen in der rückwärtigen Sitzposition die mit 21′ bezeichnete untere Stellung ein. Rückt der Fahrzeuginsasse mit den kleineren Körpermaßen in eine vordere Sitzposition, so schwenkt der hebelartige Gurtbeschlag 21 so lange um seine Achse 28, bis er eine mittlere Lage 21 einnimmt. Durch den großgewachsenen Fahrzeuginsassen (ausgezogene Linien) wird dagegen der hebelartige Gurtbeschlag 21 veranlaßt, in seine obere Endposition 21″ zu schwenken. In allen drei beschriebenen und gezeigten Positionen, die jedoch nur beispielhaft gewählt sind, da selbstverstädlich jede beliebige Zwischenstellung des hebelartigen Gurtbeschlages 21 möglich ist, weisen die oberen Schultergurtabschnitte 18 bzw. 18′ bzw. 18″ jeweils die gleiche oder im wesentlichen die gleiche Schräglage auf, so daß der Fahrzeuginsasse in jedem Fall—d.h. unabhängig von seinen Körperabmessungen—optimal von dem Gurtsystem gehalten wird. Die Verschwenkung des hebelartigen Gurtbeschlages 21 wird hierbei jeweils hervorgerufen durch Zug an dem Gurtband (18) beim Anlegen des Sicherheitsgurtes oder durch Vorbeugen des Oberkörpers oder durch die Rückzugskraft eines automatischen Gurtaufrollers, wie er z.B. in Fig. 5—7 dargestellt und mit 32 bezeichnet ist. Als Ansatzpunkt für die das Drehmoment um die Schwenkachse 28 des hebelartigen Gurtbeschlages 21 hervorgerufene Kraft kann jeweils ein mit 32 bezeichneter Punkt auf der Schulter des Fahrzeuginsassen 16 angesehen werden. Fig. 1 macht weiterhin deutlich, daß durch die auf den hebelartigen Gurtbeschlag 21 wirkenen Kräfte bzw. Drehmomente der obere Schultergurtabschnitt 18 jeweils parallel oder im wesentlichen parallel zu der Schwenkachse 28 des Gurtbeschlages 21 ausgerichtet wird. Aus der Darstellung nach Fig. 3 ist erkennbar, daß sich das Gurtband 18 beim Verschwenken des hebelartigen Gurtbeschlages 21 auch in Fahrzeugquerrichtung parallel verschiebt, und zwar im den Betrag x.

Bei der Darstellung nach Fig. 1—3 und bei den vorstehenden Betrachtungen ist das Eigengewicht von Gurt 18 und hebelartigem Gurtbeschlag 21 sowie eine eventuelle Reibung in der Lagerung des Gurtbeschlages 21 vernachlässigt. Im Normalfall wird die Schwenkachse unter einem Winkel zur Horizontalen liegen, der sich in einem Bereich von etwa 30° bis 60° bewegt. Durch stärkeres Neigen der Schwenkachse 28 lassen sich indessen die Wirkungen der im vorstehenden erwähnten Kräfte ohne weiteres kompensieren.

In der Darstellung nach Fig. 2 sind äußere Schutzabdeckungen für den hebelartigen Gurtbeschlag 21 gezeigt, die den Schwenkbereich des hebelartigen Gurtbeschlages 21 so abdecken, daß mögliches Kopf- oder Körperverletzungen bei einem seitlichen Aufprall des Fahrzeuginsassen vermieden werden. Die äißeren Abdeckungen 35, 36 schließen einen Kanal 37 für ein ungehindertes Verschwenken des hebelartigen Gurtbeschlages 21 ein. Die gezeigten und im vorstehenden beschriebenen Schutzabdeckungen 35, 36 können integrierter Bestandteil der Verkleidung der Karosserieäule 22 sein, wobei zwckmäßigerweise—wie in Fig. 2 gezeigt—eine bogenförmige Offnung 38 nach vorn für den freien Gurtaustritt vorgesehen sein sollte. Die Karosseriesäule 22 kann aber auch selbst angeformte Schutzabdeckungen bei in die Säule integriertem Gurtbeschlag aufweisen. Als hebelartiger Gurtbeschlag ist bei der Ausführungsform nach Fig. 8 ein bügelartiges Teil 21b vorgesehen, welches bei 39 an einem Lagerbock 40 schwenkbar gelagert ist, welcher karosserieseitig befestigt ist. Der hebelartige Gurtbeschlag 21b weist zwei schlitzförmige Öffnungen 41, 42 auf, durch die das Schultergurtband 18 hindurchgezogen und vernäht ist.

Fig. 4 zeigt die tatsächlichen kinematischen verhältnisse bei der Anpassung des oberen Gurtbefestigungspunktes an die verschiedenen Körpermaße der Fahrzeuginsassen durch Verschwenken des hebelartigen Furtbeschlages 21. Hierbei werden die der Darstellung nach Fig. 1—3 zugrunde liegenden vereinfachenden Annahmen korrigiert. Fig. 4 zeigt also die Höhenverstellung des hebelartigen Gurtbeschlages 21 und den entsprechenden Verlauf des Schultergurtteils 18 bei wirklichkeitsnah immer mittig im Sitz 15 placiertem Insassen 16. Durch die strichpunktierte Linie 43 ist die Wagenmitte gekennzeichnet. Man erkennt, daß gegenüber der Darstellung nach Fig. 1—3 das Schultergurtteil 18 sich nicht mehr genau parallel verschiebt. Während bei der Darstellung nach Fig. 1—3 der theoretische Verankerungspunkt (=Momentanpol der Höhenverstellung) als uendlich weit entfernt vom Fahrzeuginsassen angenommen wurde, ist bei der Darstellung nach Fig. 4 eine endliche Entfernung des Momentanpols für die Höhenverstellung angenommen. Ein wesentlicher Unterschied gegenuber Fig. 1—3 liegt außerdem darin, daß die Schwenkachse 28 des hebelartigen Gurtbeschlages 21 nicht mehr parallel zur Fahrzeugmittelachse 43, sondern in einem Winkel Alpha zu dieser geniegt ist. Die in Fig. 3 gezeigt seitliche Verschiebung x beim Verschwenken des hebelartigen Gurtbeschlages 21 entfällt dadurch, wie die Darstellung nach Fig. 4 deutlich macht.

Die im vorstehenden beschriebene und am Beispiel eines Vordersitzes demonstrierte erfindungsgemäße Sicherheitsgurtanordnung läßt sich in entsprechender Weise auch bei den Rücksitzen des Kraftfahrzeuges anwenden.

Zur Erläuterung der aus Fig. 4 ersichtlichen geometrischen Verhältnisse wird im einzelnen folgendes ausgeführt. In dem eine Draufsicht darstellenden Teil B der Fig. 4 bedeutet der mit 44 bezeichnete Kreis eine vereinfachte Darstellung des Halsquerschnittes des vorn sitzenden kleinen Fahrzeuginsassen 16 (vgl. hierzu Teil A der Fig. 4). Mit 33 ist—wie in Fig. 1—die Gurtposition auf der Schulter angegeben, wobei das Gurtband 18 einen genügenden Abstand zum Hals des Fahrzeuginassen aufweist. Der um die Achse 28 schwenkbare hebelartige Gurtbeschlag 21 ist, wie bei der Ausführungsform nach Fig. 1—3, an der mit 22 bezeichneten B-Säule der Fahrzeugkarosserie gelagert. Bei im Punkt 33 angreifender Gurtspannkraft wird der behelartige Gurtbeschlag 21 um seine Achse 28 schwenken, bis die Gurtkraft kein Drehmoment mehr auf den Gurtbeschlag 21 ausübt. Der Gurtabschnitt 18 läuft parallel zur Achse 28 und—in dem mit A bezeichneten Teil der Fig. 4 deckungsgleich zu der Linie 45. Jedes Aufrichten oder Senken des Fahrzeuginsassen 16, welches einer Lageänderung des Schulterpunktes 33 entspricht, wird erfindungsgemäß mit einer automatischen Schwenkbewegung des hebelartigen Gurtbeschlages 21 beantwortet. Für den Fahrzeuginassen 16 liegt damit der Momentanpol (=theoretische Gurtverankerung) in Richtung der Linie 45, also im Unendlichen.

Für den in ausgezogenen Linien dargestellten und mit 16″ beseichneten großen Fahrzeuginsassen stellt sich in dem Teil B der Fig. 4 der Halsquerschnitt vereinfacht als Kreis 46 dar. Hiert greift die Gurtkraft im Punkt 47 an.

Die aus dem mit C bezeichneten Teil der Fig. 4 ersichtliche Stellung des hebelartigen Gurtbeschlages stellt sich im Beispiel des großen Fahrzeuginsassen 16″ auf die Position 21″. Der auf der Verbindungslinie 28—47 liegende Gurtbeschlag 21 ist damit in seiner Position 21″ drehmomentenfrei. Der Schultergurtabschnitt zwischen dem Schulterpunkt 47 und dem Gurtangriffspunkt am hebelartigen Gurtbeschlag 21″ ist mit 18″ bezeichnet. Der momentanpol für die Höhenverstellung in dieser oberen Lage liegt im Punkt 48 (teil A der Fig. 4).

Im folgenden soll nun der mit 16′ bezeichnete kleinere Fahrzeuginsasse in einer rückwärtigen Sitzposition betrachtet werden (Teil A der Fig. 4). Im Teil B der Fig. 4 stellt sich hierbeit der Halsquerschnitt als Kreis 49 dar. Der hebelartige Gurtbeschlag 21 wird unter der Wirkung der im Schulterpunkt 50 angreifenden Gurtkraft so lange nach unten gedreht, bis erwie aus Teil C der Fig. 4 ersichtlich—die Position 21′ einnimmt. Diese Drehmomentenfreie Position des hebelartigen Gurtbeschlages 21 hat ihren Momentanpol im Punkt 51 (Teil A, Fig. 4); der Schultergurtverlauf ist mit 18′ bezeichnet.

Der mit B′ bezeichnete Teil der Fig. 4 entspricht im wesentlichen dem Teil B von Fig. 4, stellt jedoch gegenüber diesem eine Variante dar, die sich bei viertürigen Personenkraftfahrzeugen mit im Vergleich zur zweitürigen Fahrzeugen weiter vorn liegender B-Säule als vorteilhaft erweisen kann. Wie bereits oben angedeutet, ist hierbei die Schwenkachse 28 des hebelartigen Gurtbeschlages 21 nicht parallel zur Fahrzeugmittelachse angeordnet, sondern steht zu dieser in einem spitzen Winkel Alpha geneigt. Der Gurtabschnitt 18 verläuft dann, wie für viertürige Wagen charakteristisch, stärker nach aussen geneigt. Der entsprechend geneigt hebelartige Gurtbeschlag 21 verändert den oben bereits zu den Teilen A, B, C der Fig. 4 beschriebenen Schultergurtverlauf nicht wesentliche, so daß sich nähere Ereläuterungen hierzu erübrigen können.

## Patentansprüche

1. Sicherheitsgurtanordnung für die Insassen von Fahrzeugen, insbesondere von Kraftfahrzeugen, mit einen diagonal den Oberkörper des zu sichernden Fahrzeuginsassen überspannenden Schultergurt (18), wobei der obere Befestigungs- bzw. Umlenkpunkt des Gurtbandes selbsttätig stufenlos höhenverstellbar und durch einen um eine Drehachse (28) schwenkbaren hebelartigen Gurtbeschlag (21, 23, 24) mit Gurtöse (25, 25a, 41, 42) gebildet ist, an dem das obere Ende bzw. Umlenkende des Schultergurtes (18) befestigt bzw. umgelenkt ist, dadurch gekennzeichnet, daß der Gurtbeschlage um eine in Fahrzeuglängsrichtung oder innerhalb einer vertikalen Fahrzeuglängsebene zur Horizontalen geneigt liegenden Drehachse (28) schwenkbar ist, wobei die Drehachse (28) des Gurtbeschlages (21) parallel oder im wesentlichen parallel zum Verlauf des oberen Schultergurtteiles (18) liegt.

2. Sicherheitsgurtanordnung nach Anspruch 1, dadurch gekennzeichnet, daß die in Fahrzeuglängsrichtung gerichtete Drehachse (28) des Gurtbeschlages (21) von hinten oben nach vorn unten geneigt angeordnet ist.

3. Sicherheitsgurtanordnung nach Anspruch 2, gekennzeichnet durch eine derartige Neigung der Drehachse (28), daß das Eigengewicht und die Lagerreibung des Gurtbeschlages (21) ausgeglichen werden.

4. Sicherheitsgurtanordnung nach den Ansprüchen 1 bis 3, dadurch gekennzeichnet, daß die Drehachse (28) des Gurtbeschlages (21, 23, 24) zusätzlich unter einem Winkel zu der vertikalen Fahrzeuglängsebene geneigt ist.

5. Sicherheitsgurtanordnung nach den Ansprüchen 1 bis 4, dadurch gekennzeichnet, daß die Drehachse (28) des Gurtbeschlages (21) innerhalb der Konturen des zur Befestigung dienenden Karosserieteiles (Mittelsäule 22) liegt.

6. Sicherheitsgurtanordnung nach den Ansprüchen 1 bis 3 und Anspruch 5, dadurch gekennzeichnet, daß der Gurtbeschlag (21) an einem an der Mittelsäule (22) der Fahrzeugkarosserie (10) befestigten Lagerbock (27) angelenkt ist.

7. Sicherheitsgurtanordnung nach Anspruch 6, dadurch gekennzeichnet, daß der Lagerbock (27) eine Bohrung aufweist, die von einer mit dem Gurtbeschlag (21) fest verbundenen Lagerwelle (26) durchsetzt wird.

8. Sicherheitsgurtanordnung nach Anspruch 5 und einer der vorstehenden Ansprüche, dadurch gekennzeichnet, daß der Gurtbeschlag (21) im Querschnitt U-förmig ausgebildet ist und mit den Enden seiner beiden U-Schenkel (23, 24) an den Stirnflächen des Lagerbockes (27) anliegt und daß sich die Lagerwelle (26) zwischen den Enden der beiden U-Schenkel des Gurtbeschlages erstreckt.

9. Sicherheitsgurtanordnung nach einem der vorstehenden Ansprüche, dadurch gekennzeichnet, daß der schwenkbare Gurtbeschlag (21) in seinem Schwenkbereich (21', 21, 21") gegenüber dem Fahrzeuginnenraum unter Freilassung einer bogenförmigen Durchtrittsöffnung (38) für den Schultergurt (18) abgedeckt ist (Fig. 3).

10. Sicherheitsgutanordnung nach Anspruch 9, dadurch gekennzeichnet, daß die Abdeckung (35, 36) integrierter Bestandteil der inneren Karosserieverkleidung ist.

11. Sicherheitsgurtanordnung nach Anspruch 5 and 10, dadurch gekennzeichnet, daß die Abdeckung (35, 36) integrierter Bestandteil des zur Befestigung des Gurtbeschlages (21, 23, 24) dienenden Karosseriteils (Mittelsäule 22) ist und daß der Gurtbeschlag innerhalb dieses, insbesondere hohlförmig ausgebildeten Karosserieteils angeordnet ist.

12. Sicherheitsgurtanordnung nach einem oder mehreren der vorstehenden Ansprüche, dadurch gekennzeichnet, daß die Gurtöse (25) einen spitzen Winkel zur Drehachse (28) des Gurbeschlages (21a, 23a, 24a) bildet.

**Revendications**

1. Dispositif de ceinture de sécurité pour les occupants de véhicules, en particulier de véhicules automobiles, comportant une sangle-baudrier (18) qui passe en diagonale sur le buste de l'occupant du véhicule dont la sécurité doit être assurée, le point supérieure d'attache ou de renvoi de la sangle étant réglable en hauteur de façon automatique et continue et étant formé par une ferrure (21, 23, 24) de sangle, en forme de levier, pivotant autour d'un axe de rotation (28) et munie d'un anneau (25, 25a, 41, 42) pour le passage de la sangle, ferrure à laquelle est attachée ou par laquelle est renvoyée l'extrémité supérieure ou l'extrémité de renvoi de la sangle-baudrier (18), caractérisé par le fait que la ferrure de sangle est pivotante autour d'un axe de rotation (28) incliné par rapport à l'horizontale dans la direction longitudinale du véhicule ou à l'intérieur d'un plan longitudinal vertical du véhicule, l'axe de rotation (28) de la ferrure (21) de sangle étant orienté parallèlement ou sensiblement parallèlement à la partie supérieure (18) de la sangle-baudrier.

2. Dispositif de ceinture de sécurité selon la revendication 1, caractérisé par le fait que l'axe de rotation (28) de la ferrure de sangle (21), orienté dans la direction longitudinale du véhicule, est disposé suivant une inclinaison allant du haut en arrière vers le bas en avant.

3. Dispositif de ceinture de sécurité selon la revendication 2, caractérisé par le fait qu'elle présente une inclinaison de l'axe de rotation (28) telle que le poids propre et la friction de pivotement de la ferrure de sangle (21) se trouve compensés.

4. Dispositif de ceinture de sécurité selon les revendications 1 à 3, caractérisé par le fait que l'axe de rotation (28) de la ferrure de sangle (21, 23, 24) est incliné de façon supplémentaire suivant un angle par rapport au plan longitudinal vertical du véhicule.

5. Dispositif de ceinture de sécurité selon les revendications 1 à 4, caractérisé par le fait que l'axe de rotation (28) de la ferrure de sangle (21) est situé à l'intérieur des contours de la pièce de carrosserie (montant médian 22) servant à la fixation.

6. Dispositif de ceinture de sécurité selon les revendications 1 à 3 et selon la revendication 5, caractérisé par le fait que la ferrure de sangle (21) est articulée sur un support (27) fixé au montant médian (22) de la carrosserie (10) du véhicule.

7. Dispositif de ceinture de sécurité selon la revendication 6, caractérisé par le fait que le support (27) présente un perçage qui est traversé par un axe de pivotement (26) solidaire de la ferrure de sangle (21).

8. Dispositif de ceinture de sécurité selon la revendication 5 et l'une quelconque des revendications précédentes, caractérisé par le fait que la ferrure de sangle (21) est agencée en section transversale en forme de U et repose par les extrémités des deux ailes du U (23, 24) contre les surfaces frontales du support (27), et que l'axe de pivotement (26) s'étend entre les extrémités des deux ailes du U de la ferrure de sangle.

9. Dispositif de ceinture de sécurité selon l'une quelconque des revendications précédentes, caractérisé par le fait que la ferrure (21) est recouverte par un rembourrage dans sa plage de pivotement (21', 21, 21''), par rapport à l'espace intérieure du véhicule, avec aménagement d'un libre passage pour la sangle-baudrier (18), sous la forme d'une ouverture de passage (38) de forme arquée.

10. Dispositif de ceinture de sécurité selon la revendication 9, caractérisé par le fait que le revêtement ou rembourrage (35, 36) fait partie intégrante de l'habillage intérieur de la carrosserie.

11. Dispositif de ceinture de sécurité selon les revendications 5 et 10, caractérisé par le fait que le revêtement ou rembourrage (35, 36) fait partie intégrante de la pièce de carrosserie (montant médian 22) servant à la fixation de la ferrure de sangle (21, 23, 24) et que la ferrure de sangle est disposée à l'intérieur de ladite pièce de carrosserie agencée en particulier avec une forme creuse.

12. Dispositif de ceinture de séduritié selon l'une ou plusieurs des revendications précédentes, caractérisé par le fait que l'anneau (25) pour le passage de la sangle forme un angle aigu par rapport à l'axe de rotation (28) de la ferrure de sangle (21a, 23a, 24a).

**Claims**

1. Safety belt arrangement for the occupants of vehicles, particularly motor vehicles, and having a shoulder strap (18) stretching diagonally across the torso of the vehicle occupants which are to be secured, whilst the upper attachment point or deflection point of the strap is automatically and steplessly adjustable in height and consists of a lever-like belt mounting (21, 23, 24) having a belt eyelet (25, 25a, 41, 42) which are pivotable about a rotation axis (28) whilst the upper end or the deflection end of the shoulder strap is attached or deflected on the belt mounting, characterised in that the belt mounting is pivotable about a rotation axis (28) lying in a longitudinal axis or within a vertical longitudinal plane of the vehicle and lying inclined to the horizontal whereby the rotation axis (28) of the belt mounting (21) lies parallel, or substantially parallel with, the course of the upper shoulder strap part (18).

2. Safety belt arrangement in accordance with claim 1, characterised in that the rotation axis (28) of the belt mounting (21) running in the longitudinal direction of the vehicle, is inclined from rearwards above to forwards below.

3. Safety belt arrangement in accordance with claim 2, characterised by such an inclination of the rotation axis (28) that the dead weight the bearing friction of the lever-like belt mounting (21) are compensated.

4. Safety belt arrangement in accordance with claims 1 to 3, characterised in that the rotation axis (28) of the belt mounting is additionally inclined at an angle with respect to the vertical longitudinal plane of the vehicle.

5. Safety belt arrangement in accordance with claims 1 to 4, characterised in that the rotation axis (28) of the belt mounting (21) lies within the contours of the bodywork part (central pillar 22) serving for attachment.

6. Safety belt arrangement in accordance with claims 1 to 3 and claim 5, characterised in that the belt mounting (21) is articulated to a bearing bracket (27) secured to the control pillar (22) of the vehicle body (10).

7. Safety belt arrangement in accordance with claim 6, characterised in that the bearing bracket (27) has a bore which is traversed by a spindle (26) firmly connected to the belt mounting (21).

8. Safety belt arrangement in accordance with claim 5 and one of the foregoing claims, characterised in that the belt mounting (21) is made U-shaped in cross-section and rests with the ends of its two U-shaped arms (23, 24) against the front faces of the bearing bracket (27), and that the spindle (26) extends between the ends of the two U-arms of the lever-like belt mounting.

9. Safety belt arrangement in accordance with one of the foregoing claims, characterised in that within its range of swinging movement (21', 21, 21''), the pivotable belt mounting (21) is covered up with respect to the interior space of the vehicle, whilst leaving free an arc-shaped pass-through opening (38) for the shoulder strap (18), (Fig. 3).

10. Safety belt arrangement in accordance with claim 9, characterised in that the covering (35, 36) is an integral constituent part of the interior cladding of the vehicle body.

11. Safety belt arrangement in accordance with claims 5 and 10, characterised in that the covering (35, 36) is an integral constituent part of the bodywork component (central pillar 22) serving for the attachment of the belt mounting (21, 23, 24) and that the said belt mounting is arranged inside this bodywork component, particularly when made hollow.

12. Safety belt arrangement in accordance with one or more of the foregoing claims, characterised in that the belt eyelet (25) forms an acute angle with the rotation axis (28) of the belt mounting (21a, 23a, 24a).

Fig.3

Fig.2

Fig.1

Fig.4

0 024 446

Fig.5

Fig.6

0 024 446

Fig.7

Fig.8

4